# EUROPÄISCHE PATENTSCHRIFT

(11) **EP 2 068 045 B1**
(45) Veröffentlichungstag und Bekanntmachung des Hinweises auf die Patenterteilung: **17.08.2011**
(21) Anmeldenummer: 08169386.3
(22) Anmeldetag: 19.11.2008
(51) Int. Cl.: F16H 61/42

(54) **Antriebssystem eines Arbeitsfahrzeugs**
Drive system of a work vehicle
Système d'entraînement d'un véhicule de travail

(30) Priorität: 06.12.2007 DE 102007058535
(43) Veröffentlichungstag der Anmeldung: 10.06.2009
(73) Patentinhaber: Deere & Company, Moline, IL 61265-8098 (US)
(72) Erfinder: Bohrer, Stefan, 66606, St. Wendel (DE)
(74) Vertreter: Holst, Sönke

(56) Entgegenhaltungen:
- EP-A1- 1 754 643
- DE-A1- 2 848 595
- DE-A1- 10 211 799
- DE-A1- 10 350 308
- DE-A1-102006 017 792
- DE-A1-102006 047 954
- JP-A- 2003 056 695

## Beschreibung

Die Erfindung betrifft eine selbstfahrende Erntemaschine.

### Stand der Technik

Bei vielen Arbeitsfahrzeugen, wie landwirtschaftlichen Fahrzeugen und Erntemaschinen, werden hydraulische Antriebe eingesetzt. Sie umfassen eine durch einen Verbrennungsmotor angetriebene Hydraulikpumpe und einen mit der Pumpe hydraulikflüssigkeitsleitend verbundenen Hydraulikmotor, der ein Rad oder mehrere Räder antreibt. Bei manchen Fahrzeugen werden Räder der Vorder- und Hinterachse durch jeweils mindestens einen, den Achsen oder den Rädern zugeordneten Hydraulikmotor hydraulisch angetrieben.

Ein Antriebssystem wird in der DE 102 11 799 A1 beschrieben. Die Schwenkplatte der verstellbaren Hydraulikpumpe wird durch einen Aktor und eine diesen kontrollierende Steuerung abhängig von der Stellung eines durch den Bediener verstellbaren Fahrhebels angesteuert, so dass ein mit der durch den Bediener vorgegebenen Geschwindigkeit wachsender Hydraulikfluss erzeugt wird. Zwei verstellbare Hydraulikmotore sind jeweils der Vorder- oder Hinterachse zugeordnet und umfassen ebenfalls durch mit der Steuerung verbundene Aktoren verstellbare Schwenkplatten. Die Position der Schwenkplatten der Hydraulikmotore wird anhand der Ausgangsdrehzahl der Hydraulikmotore und des Druckunterschieds zwischen ihrem Ein- und Auslass angesteuert, so dass bei durchdrehenden oder sich entgegen der gewünschten Richtung rückwärts drehenden Rädern entsprechend gegengesteuert werden kann.

Als nachteilig wird bei dem Antriebssystem nach DE 102 11 799 A1 angesehen, dass der Wirkungsgrad des sich aus der Hydraulikpumpe und den Hydraulikmotoren zusammensetzenden hydraulischen Getriebes insbesondere im unteren Geschwindigkeitsbereich relativ schlecht ist.

Die EP 1 754 643 A1 beschreibt ein Antriebssystem für eine Arbeitsmaschine, beispielsweise einen Bagger, das einen Verbrennungsmotor und eine hydrostatische Antriebseinheit mit einer Pumpe und einem Motor sowie eine elektronische Steuereinheit umfasst. Zunächst wird die Abgabeleistung der hydrostatischen Antriebseinheit ermittelt, beispielsweise anhand des Förderdrucks und des geförderten Volumens oder des Schwenkwinkels der Pumpe. Unter Berücksichtigung eines Kennfelds der hydrostatischen Antriebseinheit, der Abgabeleistung und eines Kennfelds des Verbrennungsmotors wird ein wirkungsgradgünstigster Betriebspunkt für das Antriebssystem ermittelt und eingestellt. Hier werden der Fahrantrieb und auch ein verstellbarer Arm hydraulisch betätigt, sodass die bei unterschiedlichen Belastungen variierende Drehzahl des Verbrennungsmotors unproblematisch ist. Diese veränderbare Drehzahl des Verbrennungsmotors ist bei Erntemaschinen jedoch nicht sinnvoll, denn dort werden Arbeitsaggregate mechanisch vom Verbrennungsmotor angetrieben.

### Aufgabe

Das der Erfindung zu Grunde liegende Problem wird darin gesehen, ein verbessertes Antriebssystem einer Erntemaschine bereitzustellen, das die genannten Nachteile nicht aufweist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das Antriebssystem des Arbeitsfahrzeugs, bei dem es sich um eine selbstfahrende Erntemaschine handelt, umfasst einen Verbrennungsmotor. Der Verbrennungsmotor treibt eine Hydraulikpumpe direkt oder indirekt, d.h. über dazwischen geschaltete mechanische, hydraulische oder beliebige andere Getriebe an. Die Hydraulikpumpe steht über eine Hydraulikleitung mit einem Hydraulikmotor in Verbindung, der ein im Eingriff mit dem Erdboden befindliches Vortriebsmittel, insbesondere ein Rad oder ein Raupenlaufwerk, mechanisch antreibt. Die Fluidverdrängungen der Hydraulikpumpe und des Hydraulikmotors sind durch einen ersten Aktor bzw. einen zweiten Aktor verstellbar. Eine Steuereinrichtung ist mit beiden Aktoren und einer Geschwindigkeitsvorgabeeinrichtung verbunden, die ein Sollgeschwindigkeitssignal bereitstellt, das eine Information über die gewünschte Sollgeschwindigkeit enthält, mit dem das Arbeitsfahrzeug angetrieben werden soll. Die

Geschwindigkeitsvorgabeeinrichtung kann durch den Bediener betätigt werden, oder sie arbeitet automatisch, um beispielsweise einen konstanten Emtegutdurchsatz zu erzielen. Die Steuereinrichtung hat zwei Freiheitsgrade, um die Sollgeschwindigkeit zu erzielen, nämlich die Positionen der Aktoren, mit denen die Fluidverdrängungen der Hydraulikpumpe und des Hydraulikmotors verändert werden. Einer der Freiheitsgrade wird durch die gewünschte Sollgeschwindigkeit belegt, während die vorliegende Erfindung vorsieht, den anderen Freiheitsgrad derart auszunutzen, dass man einen optimalen (d. h. maximalen) Gesamtwirkungsgrad des aus der Hydraulikpumpe und dem Hydraulikmotor bestehenden hydraulischen Getriebes erzielt.

Die Steuereinrichtung ist zusätzlich mit einer Motorsteuerung des Verbrennungsmotors verbunden. Die Steuereinrichtung verändert auch die Drehzahl des Verbrennungsmotors in einer Weise, dass der Gesamtwirkungsgrad des gesamten Antriebssystems einschließlich des Verbrennungsmotors optimiert wird.

Diese Variation der Drehzahl des Verbrennungsmotors ist im Straßenfahrbetrieb vorgesehen, der anhand eines zur Umschaltung zwischen dem Feldbetrieb und dem Straßenfahrbetrieb ausgelegten Schalters erkennbar ist. Während des Feldbetriebs ist es hingegen vorgesehen, die Drehzahl des Verbrennungsmotors durch einen Bediener oder eine auf geeigneten Sensorwerten für den jeweiligen Erntegutdurchsatz basierende selbsttätige Steuerung fest vorgebbar und konstant zu halten, um geeignete Drehzahlen für die Arbeitsaggregate der Erntemaschine, wie Dresch- und Trenneinrichtungen für Mähdrescher oder Häcksel- und Fördereinrichtungen für Feldhäcksler bereitzustellen.

Auf diese Weise erhält man eine Verbesserung des Wirkungsgrads des Antriebssystems und eine Verminderung des Kraftstoffbedarfs.

Als weiterer Eingangsparameter kann, wenn die Drehzahl des Verbrennungsmotors in einer Weise verändert wird, dass der Gesamtwirkungsgrad des gesamten Antriebssystems einschließlich des Verbrennungsmotors optimiert wird, eine Erfassung des vom Hydraulikmotor abgegebenen Drehmoments mittels eines Drehmomentsensors dienen, die zur Bestimmung der zur Bereitstellung des benötigten Drehmoments bzw. Leistung geeignetesten Drehzahl des Verbrennungsmotors herangezogen werden kann.

Der Wirkungsgrad von Hydraulikpumpen und Hydraulikmotoren hängt insbesondere von der Druckdifferenz zwischen dem Einlass und dem Auslass ab, die wiederum im Zusammenhang mit der durch den jeweiligen Aktor durch Verstellen der Schwenkscheibe vorgegebenen Fluidverdrängung steht. Im Allgemeinen steigt der Wirkungsgrad des hydraulischen Getriebes mit steigendem Druck bis auf einen für die Hydraulikpumpe bzw. den Hydraulikmotor spezifischen Wert an. Es bietet sich daher an, die Hydraulikpumpe und den Hydraulikmotor auf diese Werte zu kommandieren, so dass diese mit dem besten Wirkungsgrad arbeiten, indem die Steuereinrichtung mit einem zur Erfassung des ausgangseitig an der Hydraulikpumpe herrschenden Drucks eingerichteten Drucksensor verbunden wird und die Aktoren derart verstellt, dass ein Druck am Drucksensor erzielt wird, bei dem der Gesamtwirkungsgrad der Hydraulikpumpe und des Hydraulikmotors maximal ist. Dieser Druck kann in einer mit der Steuerung verbundenen Speichereinrichtung abgelegt werden. Demnach wird die Fluidverdrängung ausgehend von einer maximalen Fluidverdrängung solange vermindert, bis der optimale Druck vorhanden ist. Analog wird sie ausgehend von einer zu geringen Fluidverdrängung, die einen größeren als den optimalen Druck bewirkt, vergrößert, bis der optimale Druck erreicht ist. Dieser optimale Druck kann von der gewünschten Drehzahl des Hydraulikmotors abhängen, so dass die Drehzahl des Hydraulikmotors bzw. die Sollgeschwindigkeit zur Auswahl des anzusteuernden Drucks mit herangezogen werden kann. Dazu können geeignete Kurven, Formeln oder Tabellen in einer Speichereinrichtung der Steuereinrichtung abgelegt und abgerufen werden.

Weiterhin wird vorgeschlagen, das vom Hydraulikmotor abgegebene Drehmoment durch einen Drehmomentsensor zu erfassen. Dadurch wird es möglich, Situationen zu erkennen, in denen der von der Hydraulikpumpe bereitgestellte Druck nicht mehr hinreicht, das Drehmoment am Ausgang des Hydraulikmotors bereitzustellen. In derartigen Fällen, in denen das erfasste Drehmoment einen Schwellenwert übersteigt, wird die Steuereinrichtung den ersten und zweiten Aktor veranlassen, die Fluidverdrängungen der Hydraulikpumpe und des Hydraulikmotors zu vergrößern, um (allerdings auf Kosten des Wirkungsgrads) das benötigte Drehmoment bereitstellen zu können. Der Schwenkwinkel der Hydraulikpumpe kann bis zum maximal möglichen Wert oder einen darunter liegenden Wert verstellt werden, der aber noch zur Bereitstellung des geforderten Drehmoments hinreicht und einen bessern Wirkungsgrad als der maximale Schwenkwinkel bietet.

### Ausführungsbeispiel

In der Zeichnung ist ein nachfolgend näher beschriebenes Ausführungsbeispiel der Erfindung dargestellt. Es zeigt:
- Fig. 1: ein Schema eines erfindungsgemäßen Antriebssystems, und
- Fig. 2: ein Flussdiagramm, nach dem die Steuerungseinrichtung der Figur 1 arbeitet.

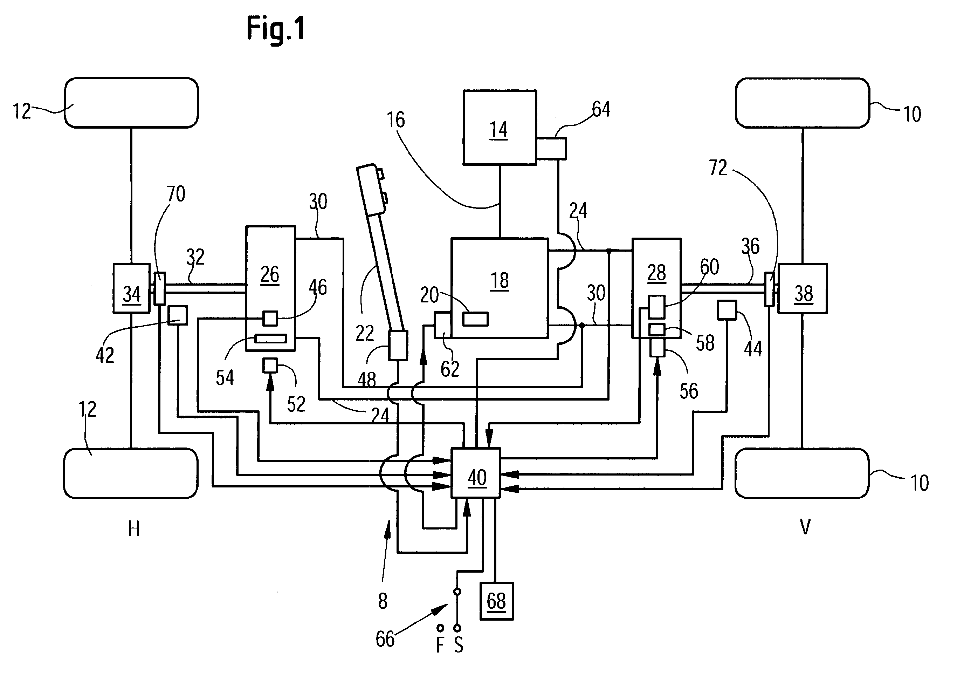

In der Figur 1 ist eine Ausführungsform eines erfindungsgemäßen Antriebssystems schematisch dargestellt. Ein Arbeitsfahrzeug 8 weist einen (nicht dargestellten) Rahmen oder ein selbsttragendes Chassis auf, der sich auf vorderen Vortriebsmitteln 10 und hinteren Vortriebsmitteln 12 in Form von Rädern abstützt, die sich im Eingriff mit dem Erdboden befinden. Die hinteren Vortriebsmittel 12 sind in der Regel lenkbar, während die vorderen Vortriebsmittel 10 größeren Durchmessers als die hinteren Vortriebsmittel 12 sind und den größeren Teil des Gewichts des Arbeitsfahrzeugs 8 abstützen, insbesondere wenn es sich um eine Erntemaschine in Form eines Mähdreschers oder selbstfahrenden Feldhäckslers handelt.

Das Antriebssystem umfasst einen Verbrennungsmotor 14 in Form eines Dieselmotors. Über eine Welle 16 treibt der Verbrennungsmotor 14 eine Hydraulikpumpe 18 an, deren Fluidverdrängung durch eine Schwenkscheibe 20 veränderbar ist, deren Position mechanisch durch einen ersten Aktor 62 gesteuert wird. Die Hydraulikpumpe 18 weist einen Auslass auf, der durch Leitungen 24 mit dem Einlass eines ersten Hydraulikmotors 26 und dem Einlass eines zweiten Hydraulikmotors 28 verbunden ist. Ein Einlass der Hydraulikpumpe 18 ist über Leitungen 30 mit dem Auslass des ersten Hydraulikmotors 26 und dem Auslass des zweiten Hydraulikmotors 28 verbunden. Der Verbrennungsmotor 14 treibt, falls das Arbeitsfahrzeug 8 eine selbstfahrende Erntemaschine ist, auch deren Gutbearbeitungseinrichtungen an.

Der erste Hydraulikmotor 26 treibt über eine erste Antriebswelle 32 und ein erstes selbstsperrendes Differenzialgetriebe 34 die beiden hinteren Räder 12 an. Der zweite Hydraulikmotor 28 treibt über eine zweite Antriebswelle 36 und ein zweites selbstsperrendes Differenzialgetriebe 38 die beiden vorderen Räder 10 an. Der erste Hydraulikmotor 26 kann wahlweise ein- und ausschaltbar sein, so dass ein Vierradantrieb nur in besonderen Betriebssituationen auswählbar ist, in denen ein besseres Traktionsvermögen benötigt wird. Zwischen dem zweiten Hydraulikmotor 28 und dem zweiten Differenzialgetriebe 38 kann ein Schaltgetriebe mit unterschiedlichen, wählbaren Übersetzungsstufen vorhanden sein, das in der Figur 1 aus Gründen der Übersichtlichkeit nicht eingezeichnet ist.

Eine Steuereinrichtung 40 ist mit einem ersten Drehzahlsensor 42, einem zweiten Drehzahlsensor 44 und einem ersten Drucksensor 46 verbunden. Der erste Drehzahlsensor 42 ist der ersten Antriebswelle 32 benachbart angeordnet und gibt bei jeder Umdrehung (oder mehrmals während einer Umdrehung) der ersten Antriebswelle 32 einen Impuls ab. Er kann einen optischen oder magnetischen Sensor umfassen, der mit entsprechenden Markierungen oder Permanentmagneten zusammenwirkt, die an der ersten Antriebswelle 32 befestigt sind. Der zweite Drehzahlsensor 44 ist der zweiten Antriebswelle 36 benachbart angeordnet und gibt bei jeder Umdrehung (oder mehrmals während einer Umdrehung) der zweiten Antriebswelle 36 einen Impuls ab. Er kann einen optischen oder magnetischen Sensor umfassen, der mit entsprechenden Markierungen oder Permanentmagneten zusammenwirkt, die an der zweiten Antriebswelle 36 befestigt sind. Der Drucksensor 46 ist im Innenraum des ersten Hydraulikmotors 26 angeordnet und erfasst den Druck, der am Auslass des ersten Hydraulikmotors 26 anliegt. Ein Fahrhebelstellungssensor 48 erfasst die Position eines am Bedienerarbeitsplatz des Arbeitsfahrzeugs 8 angebrachten Fahrhebels 22. Der Fahrhebelstellungssensor 48 erfasst die aktuelle Stellung des Fahrhebels 22 optisch oder magnetisch.

Die Steuereinrichtung 40 ist mit einem zweiten elektromechanischen Aktor 52 verbunden, der zur Verstellung einer Schwenkscheibe 54 des ersten Hydraulikmotors 26 eingerichtet ist. Eine Information über die Stellung des Aktors 52 kann an die Steuereinrichtung 40 zurückgekoppelt werden. Findet ein Schrittmotor als Aktor 52 Verwendung, erübrigt sich diese Rückkopplung. Sie ist auch grundsätzlich nicht erforderlich, da der Betriebszustand des ersten Hydraulikmotors 26 erfasst wird.

Die Steuereinrichtung 40 erhält vom zweiten Drehzahlsensor 44 einen Messwert hinsichtlich der Drehzahl der vorderen Räder 10. Außerdem erhält die Steuereinrichtung 40 vom ersten Drehzahlsensor 42 eine Information über die Drehzahl der hinteren Räder 12.

Auch der zweite Hydraulikmotor 28 weist eine durch einen zweiten elektromechanischen Aktor 56 und eine verstellbare Schwenkscheibe 58 veränderbare Fluidverdrängung auf, und ihm ist ein zweiter Drucksensor 60 zugeordnet, der den Druck am Auslass des zweiten Hydraulikmotors 28 misst. Die Steuereinrichtung 40 ist mit dem Drucksensor 60 und dem Aktor 56 verbunden.

Weiterhin ist zur Verstellung der Schwenkscheibe 20 der Hydraulikpumpe 18 ein erster Aktor 62 vorgesehen, der elektromechanisch oder elektrohydraulisch arbeitet und durch die Steuereinrichtung 40 gesteuert wird. Es ist denkbar, der Steuereinrichtung 40 zusätzlich eine Information über die jeweilige Stellung des ersten Aktors 62 zuzuführen. Eine derartige Rückführung ist aber nicht unbedingt notwendig, da ein Schrittmotor verwendet werden kann, und da der Steuereinrichtung auch wegen der Rückkopplung insbesondere über die Drehzahlsensoren 42, 44 und die Drucksensoren 46, 60 eine Information über den Betriebszustand der Hydraulikpumpe 18 vorliegt. Die Steuereinrichtung 40 erhält vom Fahrhebelstellungssensor 48 ein Sollgeschwindigkeitssignal hinsichtlich der Stellung des (als Geschwindigkeitsvorgabeeinrichtung dienenden) Fahrhebels 22.

Dem Verbrennungsmotor 14 ist eine mit der Steuereinrichtung 40 verbundene Motorsteuerung 64 zugeordnet, welche die Drehzahl des Verbrennungsmotors 14 bestimmt. Ein mit der Steuereinrichtung 40 verbundener Schalter 66 dient zur Umstellung zwischen einem Feldbetrieb (Stellung F) und einem Straßenbetrieb (Stellung S). Schließlich ist die Steuerung 40 mit einer Speichereinrichtung 68 und zwei Drehmomentsensoren 70, 72 verbunden, welche das Drehmoment in den Wellen 32 bzw. 36 erfassen.

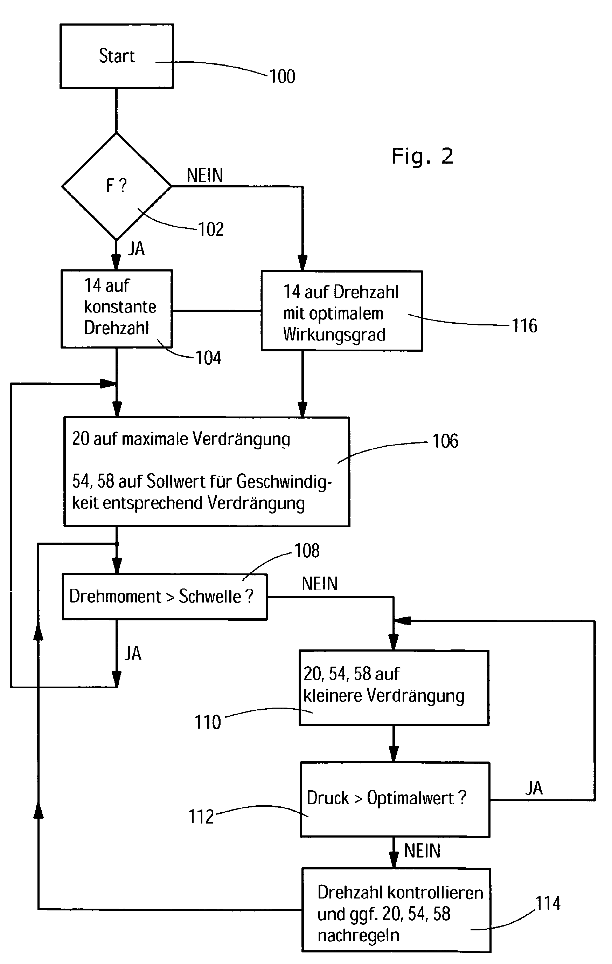

Nach alledem erfolgt die Arbeitsweise der Steuereinrichtung 40 des Antriebssystems des Arbeitsfahrzeugs 8 wie in der Figur 2 dargestellt. Befindet sich nach dem Start (Schritt 100) der Schalter 66 in der Stellung für Feldbetrieb (Schritt 102), veranlasst die Steuereinrichtung 40 den Verbrennungsmotor 14 mittels der Motorsteuerung 64, sich mit einer konstanten Drehzahl zu drehen, die durch den Bediener über einen nicht dargestellten Drehknopf vorgebbar sein kann (Schritt 104). Die Steuereinrichtung 40 veranlasst dann den ersten Aktor 62, die Schwenkplatte 20 der Hydraulikpumpe 18 in eine Stellung maximaler Fluidverdrängung zu bewegen, während die zweiten Aktoren 52, 56 die Schwenkplatten der Hydraulikmotoren 26, 28 in eine vom Sollgeschwindigkeitssignal vom Fahrhebelstellungssensor 48 abhängige Stellung verbringen (Schritt 106). Die Arbeitsmaschine 8 wird demnach in eine Bewegungsrichtung vorwärts oder rückwärts bewegt. Die Steuereinrichtung 40 erfasst die Messwerte der Drehmomentsensoren 70, 72 und vergleicht sie mit einem in der Speichereinrichtung 68 abgelegten Schwellenwert (Schritt 108). Überschreitet einer der Drehmomentwerte den Schwellenwert, erfolgt zunächst keine weitere Verstellung der Aktoren 52, 56, 62, sondern der Vorgang wird wiederholt (Schritt 106).

Unterschreiten die Drehmomente in den Wellen 32, 36 den Schwellenwert, besteht die Möglichkeit, die Schwenkscheiben 20, 54 und 58 in kleinere Schwenkwinkel zu verstellen, die einen besseren Wirkungsgrad des hydraulischen Getriebes ermöglichen. Demnach wird der erste Aktor 62 veranlasst, die Schwenkscheibe 20 der Hydraulikpumpe 18 in Richtung einer geringeren Fluidverdrängung zu verstellen, und die zweiten Aktoren 52, 56 werden durch die Steuerung 40 veranlasst, die Schwenkscheiben 54, 58 der Hydraulikmotoren 26, 28 ebenfalls in Richtung einer geringeren Fluidverdrängung zu verstellen (Schritt 110). Diese Verstellung erfolgt, bis die mittels der Drucksensoren 46, 60 erfassten Drücke einem Optimalwert entsprechen, der einem maximalen Wirkungsgrad des hydraulischen Getriebes entspricht und in der Speichereinrichtung 68 abgelegt ist (Schritt 112). Analog kann die Steuereinrichtung 40 an dieser Stelle die Aktoren 62, 52, 56 veranlassen, die Schwenkscheiben 20, 54, 58 in Richtung einer größeren Fluidverdrängung zu bewegen, wenn der mittels der Drucksensoren 46, 60 erfasste Druck größer als der optimale Druck ist und der Wirkungsgrad demnach ebenfalls nicht optimal ist.

Während dieser Verstellungen sollen die Drehzahlen an den Wellen 32, 36 konstant bleiben, was die Steuerung 40 mittels der Drehzahlsensoren 42, 44 überwacht und wenn nötig mittels der Aktoren 52, 56 nachregelt (Schritt 114). Demnach wird der Wirkungsgrad des hydraulischen Getriebes optimiert. Die beschriebenen Regelvorgänge werden regelmäßig, z. B. alle 0,1 s, wiederholt (mit Schritt 108).

Steht der Schalter 66 in der Stellung für Straßenbetrieb (Schritt 102), kontrolliert und variiert die Steuerung 40 zusätzlich die Drehzahl des Verbrennungsmotors 14 über die Motorsteuerung 64. Dabei wird jeweils die Belastung des Verbrennungsmotors 14 anhand dessen Drehzahl (und/ oder anhand des Messwertes der Drehmomentsensoren 70, 72) erfasst und auf einen Wert eingestellt, bei dem der Gesamtwirkungsgrad des Antriebssystems einschließlich des Verbrennungsmotors 14 und des hydraulischen Getriebes maximal ist (Schritt 116). Die Schwenkscheiben 20, 54 und 56 werden dabei in der bezüglich des Feldbetriebs beschriebenen Weise verstellt (Schritte 106 ff).

## Patentansprüche

1. Selbstfahrende Erntemaschine mit einem Antriebssystem mit:
einem Verbrennungsmotor (14),
einer mit dem Verbrennungsmotor (14) in Antriebsverbindung stehenden Hydraulikpumpe (18), deren Fluidverdrängung durch einen ersten Aktor (62) veränderbar ist,
einem hydraulikflüssigkeitsleitend mit der Hydraulikpumpe (18) verbundenen Hydraulikmotor (26, 28), dessen Fluidverdrängung durch einen zweiten Aktor (52, 56) veränderbar ist und der mit wenigstens einem im Eingriff mit dem Erdboden befindlichen Vortriebsmittel (10, 12) in Antriebsverbindung steht,
und einer Steuereinrichtung (40), die mit einer Motorsteuerung (64) des Verbrennungsmotors (14), dem ersten Aktor (62), dem zweiten Aktor (52, 56) und einer zur Erzeugung eines Sollgeschwindigkeitssignals ausgelegten Geschwindigkeitsvorgabeeinrichtung (22) verbunden und betreibbar ist, den ersten Aktor (62) und den zweiten Aktor (52, 56) derart anzusteuern, dass das Vortriebsmittel (10, 12) mit einer durch die Geschwindigkeitsvorgabeeinrichtung (22) vorgegebenen Sollgeschwindigkeit angetrieben wird,
wobei die Steuereinrichtung (40) betreibbar ist, den ersten Aktor (62) und den zweiten Aktor (52, 56) in einer Weise anzusteuern, dass der Gesamtwirkungsgrad der Hydraulikpumpe (18) und des Hydraulikmotors (26, 28) maximal ist,
die Steuereinrichtung (40) mit einem Schalter (66) zur Umstellung zwischen Feldbetrieb und Straßenfahrbetrieb verbunden ist,
und die Drehzahl des Verbrennungsmotors (14) bei auf Feldbetrieb gestelltem Schalter (66) durch einen Bediener oder eine auf Sensorwerten für den jeweiligen Emtegutdurchsatz basierende selbsttätige Steuerung fest vorgebbar und konstant ist, um geeignete Drehzahlen für die Arbeitsaggregate der Erntemaschine bereitzustellen, während die Steuereinrichtung (40) bei auf Straßenfahrbetrieb gestellten Schalter (66) betreibbar ist, auch die Drehzahl des Verbrennungsmotors (14) derart zu variieren, dass ein maximaler Gesamtwirkungsgrad des Antriebssystems erzielt wird.

2. Erntemaschine nach Anspruch 1, **dadurch gekennzeichnet, dass** die Steuereinrichtung (40) mit einem zur Erfassung des ausgangseitig an der Hydraulikpumpe (18) herrschenden Drucks eingerichteten Drucksensor (46, 60) verbunden und betreibbar ist, die Aktoren (62, 52, 56) derart zu verstellen, dass ein Druck am Drucksensor (46, 60) erzielt wird, bei dem der Gesamtwirkungsgrad der Hydraulikpumpe (18) und des Hydraulikmotors (26, 28) maximal ist.

3. Erntemaschine nach Anspruch 2, **dadurch gekennzeichnet, dass** die Steuereinrichtung (40) mit einem zur Erfassung des vom Hydraulikmotor (26, 28) abgegebenen Drehmoments eingerichteten Drehmomentsensor (70, 72) verbunden und betreibbar ist, den ersten und zweiten Aktor (62, 52, 56) zu veranlassen, die Fluidverdrängungen der Hydraulikpumpe (18) und des Hydraulikmotors (26, 28) zu vergrößern, wenn das Signal des Drehmomentsensors (70, 72) einen Schwellenwert übersteigt und/oder umgekehrt.

4. Erntemaschine nach einem der vorhergehenden Ansprüche in Form eines Mähdreschers oder Feldhäckslers.

## Claims

1. Self-propelling harvesting machine, with a drive system having:
an internal combustion engine (14),
a hydraulic pump (18) which is connected for driving purposes to the internal combustion engine (14) and the fluid displacement of which can be changed by a first actuator (62),
a hydraulic motor (26, 28) which is connected to the hydraulic pump (18) in a manner conducting hydraulic fluid and the fluid displacement of which can be changed by a second actuator (52, 56) and which is connected for driving purposes to at least one means of propulsion (10, 12) which is in engagement with the ground,
and a control device (40) which is connected to an engine controller (64) of the internal combustion engine (14) and to the first actuator (62), the second actuator (52, 56) and to a speed-specifying device (22) configured to produce a desired speed signal, and can be operated so as to activate the first actuator (62) and the second actuator (52, 56) in such a manner that the means of propulsion (10, 12) is driven at a desired speed which is predetermined by the speed-specifying device (22),
wherein the control device (40) can be operated so as to activate the first actuator (62), and the second actuator (52, 56) in such a manner that the overall efficiency of the hydraulic pump (18) and of the hydraulic motor (26, 28) is at maximum,
the control device (40) is connected to a switch (66) for switching between field mode and road driving mode, and, when the switch (66) is switched to field mode, the rotational speed on the internal combustion engine (14) is fixedly predetermined by an operator or by an automatic controller on the basis of sensor values for the particular harvested crop throughput and is constant in order to provide suitable rotational speeds for the working implements of the harvesting machine while, when the switch (66) is switched to road driving mode, the control device (40) can be operated also to vary the rotational speed of the internal combustion engine (14) in such a manner that a maximum overall efficiency of the drive system is obtained.

2. Harvesting machine according to Claim 1, **characterized in that** the control device (40) is connected to a pressure sensor (46, 60), which is designed to detect the pressure prevailing on the output side of the hydraulic pump (18), and can be operated so as to adjust the actuators (62, 52, 56) in such a manner that a pressure is obtained at the pressure sensor (46, 60), at which pressure the overall efficiency of the hydraulic pump (18) and of the hydraulic motor (26, 28) is at maximum.

3. Harvesting machine according to Claim 2, **characterized in that** the control device (40) is connected to a torque sensor (70, 72), which is designed to detect the torque output by the hydraulic motor (26, 28), and can be operated so as to cause the first and second actuator (62, 52, 56) to increase the fluid displacements of the hydraulic pump (18) and of the hydraulic motor (26, 28) when the signal from the torque sensor (70, 72) exceeds a threshold value, and/or vice versa.

4. Harvesting machine according to one of the preceding claims, **characterized in** the form of a combine harvester or field chopper.

## Revendications

1. Moissonneuse automotrice dotée d'un système d'entraînement comprenant :
un moteur à combustion (14),
une pompe hydraulique (18) en liaison d'entraînement avec le moteur à combustion (14), dont le refoulement de fluide peut être modifié par un premier actionneur (62),
un moteur hydraulique (26, 28) relié à la pompe hydraulique (18) par conduction de liquide hydraulique, moteur dont le refoulement de fluide peut être modifié par un second actionneur (52, 56) et qui est en liaison d'entraînement avec au moins un moyen propulseur (10, 12) se trouvant en prise avec le sol,
et un dispositif de commande (40), qui est relié et peut être exploité avec une commande de moteur (64) du moteur à combustion (14), le premier actionneur (62), le second actionneur (52, 56) et un dispositif de spécification de vitesse (22) conçu pour générer un signal de vitesse théorique pour commander le premier actionneur (62) et le second actionneur (52, 56), de telle sorte que le moyen propulseur (10, 12) est entraîné avec une vitesse théorique prédéfinie par le dispositif de spécification de vitesse (22),
le dispositif de commande (40) pouvant être exploité pour commander le premier actionneur (62) et le second actionneur (52, 56), en ce sens que le rendement global de la pompe hydraulique (18) et du moteur hydraulique (26, 28) est maximal,
le dispositif de commande (40) étant relié à un commutateur (66) pour la commutation entre le mode champ et le mode déplacement sur route,
et le régime du moteur à combustion (14) pouvant être prédéfini de façon fixe, lorsque le commutateur (66) est positionné sur le mode champ, par un opérateur ou une commande automatique basée sur des valeurs de capteur pour le débit de produit récolté respectif et étant constant, afin de fournir des régimes appropriés pour les ensembles de travail de la moissonneuse, alors que le dispositif de commande (40) peut être utilisé avec le commutateur (66) positionné sur le mode déplacement sur route, de façon à modifier également le régime du moteur à combustion (14) de telle sorte qu'un rendement global maximal du système d'entraînement est obtenu.

2. Moissonneuse selon la revendication 1, **caractérisée en ce que** le dispositif de commande (40) est relié à un capteur de pression (46, 60) équipé pour détecter la pression régnant côté sortie sur la pompe hydraulique (18) et peut être exploité pour régler les actionneurs (62, 52, 56) de telle sorte qu'on obtienne une pression sur le capteur de pression (46, 60) avec laquelle le rendement global de la pompe hydraulique (18) et du moteur hydraulique (26, 28) est maximal.

3. Moissonneuse selon la revendication 2, **caractérisée en ce que** le dispositif de commande (40) est relié à un capteur de couple (70, 72) équipé pour détecter le couple délivré par le moteur hydraulique (26, 28) et peut être exploité pour ordonner au premier et au second actionneur (62, 52, 56) d'augmenter les refoulements de fluide de la pompe hydraulique (18) et du moteur hydraulique (26, 28) lorsque le signal du capteur de couple (70, 72) dépasse une valeur seuil et/ou inversement.

4. Moissonneuse selon l'une quelconque des revendications précédentes sous la forme d'une moissonneuse-batteuse ou d'une ramasseuse-hacheuse.
